# EUROPEAN PATENT APPLICATION

(11) **EP 3 185 576 A1**
(43) Date of publication of application: **28.06.2017**
(21) Application number: 15307073.5
(22) Date of filing: 21.12.2015
(51) Int. Cl.: H04N 21/6375, H04N 21/262

(54) **ON-DEMAND REPAIR MODE FOR A STAGGERCAST STREAM**

(71) Applicant: Thomson Licensing, 92130 Issy-les-Moulineaux (FR)
(72) Inventor: QUINQUIS, Cyril, 35576 Cesson-Sévigné (FR); AUMONT, Franck, 35576 Cesson-Sévigné (FR)
(74) Representative: Huchet, Anne

(57) **Abstract**

In a staggercasting system, a staggercast receiver, which receives at least a main stream and stagger stream, where the main stream has a stagger delay with respect to the stagger stream, detects an error in the received stagger stream and repairs the error in the stagger stream by receiving replacement content from a server within the stagger delay.

## Description

### BACKGROUND OF THE INVENTION

The present invention generally relates to communications systems and, more particularly, to wireless and wired systems, e.g., terrestrial broadcast, cellular, Wireless-Fidelity (Wi-Fi), satellite, cable, etc.

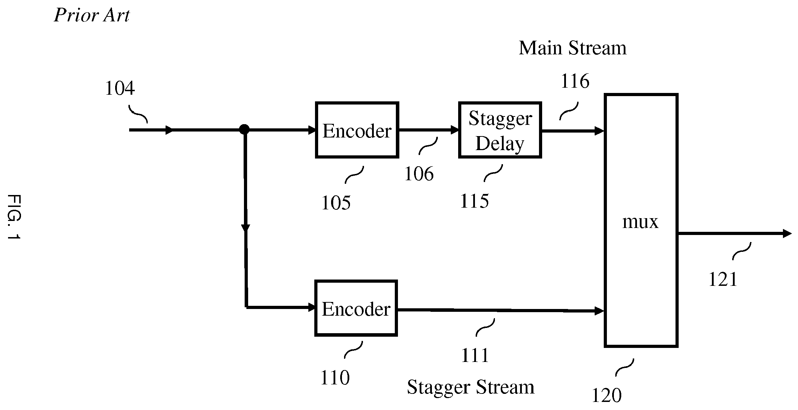

In staggercasting, a stream, e.g., of packets, is sent twice - as a main stream and as a stagger stream. The stagger stream is sent in advance compared to the main stream, i.e., the main stream is delayed (the stagger delay). An illustrative staggercasting transmitter is shown in FIG. 1. The elements shown in the figure are well-known and will not be described in detail. In FIG. 1, a staggercast transmitter illustratively comprises encoders 105 and 110, stagger delay 115 and multiplexer (mux) 120. A signal 104 is applied to encoders 105 and 110, which encode the signal to provide encoded signals 106 and 111, respectively. Encoded signal 111 is also stagger stream 111. For illustration purposes, these encoders perform the same type of encoding, although this is not required. Encoded signal 106 is then delayed in time by stagger delay 115 to provide main stream 116. This delay can be adjustable or fixed. As a result of being delayed, the stagger stream is now "in advance" of the main stream. Mux 120 multiplexes the main stream and the stagger stream to provide output stream 121 for transmission (broadcast), i.e., the transmitted stream.

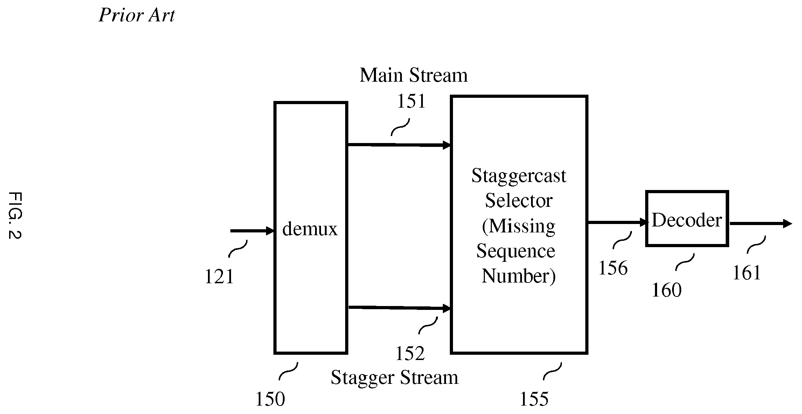

Turning now to FIG. 2, an illustrative staggercast receiver is shown. The staggercast receiver comprises demultiplexer (demux) 150, staggercast selector 155 and decoder 160. The transmitted stream (the transmission medium, e.g., broadcast, internet, etc., is not shown in FIG. 2) is received by demux 150, which demultiplexes the received transmitted stream 121 and provides main stream 151 and stagger stream 152. Therefore, in case of loss due to physical disruptions (either corrupted packets or missing packets), a correction can be made on the receiver side by staggercast selector 155 by inserting data from stagger stream 152 into the main stream 151. For example, staggercast selector 155 detects "holes" or missing packets in main stream 151 when a discontinuity is found in the sequence number of received transport packets in main stream 152. Since packets from stagger stream 152 were received earlier, staggercast selector 155 inserts the correct packet from stagger stream 152 for the missing packet in main stream 151 and provides output signal 156 to decoder 160. In this way, missing packets from main stream 151 can be replaced by using the corresponding packets received earlier from stagger stream 152. Thus, the quality of service (QoS) to the user is maintained and decoder 160 provides a decoded stream 161 (e.g., for additional processing (not shown)) for viewing by a user.

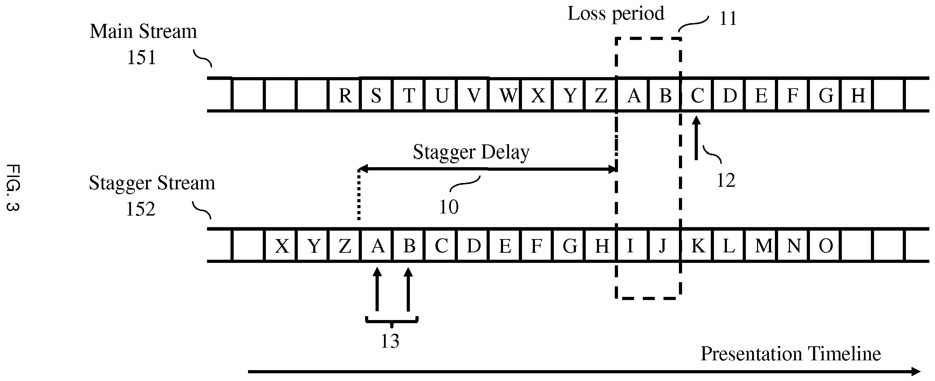

This packet loss example is further illustrated in FIG. 3. Stagger stream 152 comprises a stream of packets as represented by packets "X" thru "O", where "X" thru "O", represent packet sequence numbers. Likewise, main stream 151 comprises a stream of packets as represented by packets "R" thru "H". The stagger delay 10 is illustrated using packet "A" in stagger stream 152 and where corresponding packet "A" should be in main stream 151. Unfortunately, a loss period 11 (shown as a dashed line box) occurs such that stagger stream 152 is missing packets "I" and "J" and main stream 151 is missing packets "A" and "B". Staggercast selector 155, of FIG. 2, detects that packets are missing from main stream 151 when receiving packet "C" (12) since this received packet has a sequence number corresponding to "C" instead of "A" or "B". As such, staggercast selector 155 pushes the earlier received packets "A" and "B" (13) from stagger stream 152 and packet "C" from main stream 151 to decoder 160, of FIG. 2. As can be observed, QoS to the user is maintained, i.e., there is no break in the decoded audio/video content since packets "A" and "B" are used to replace the corresponding missing packets from main stream 151.

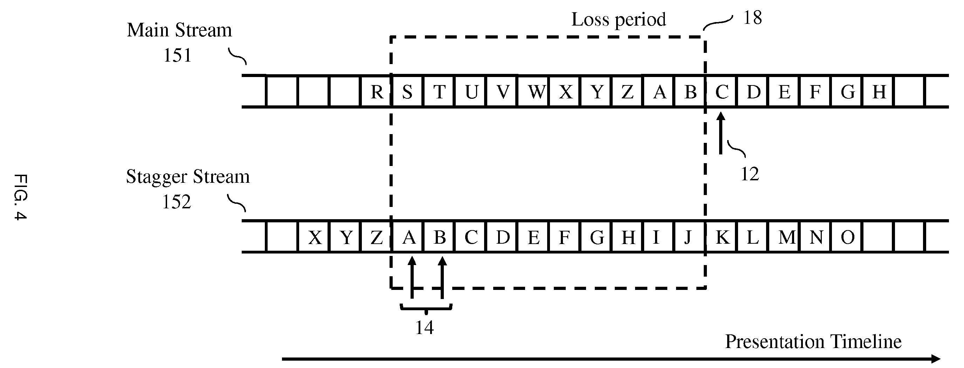

However, if missing packets are not available from the stagger stream then the QoS to the user degrades. This is illustrated in FIG. 4. Unfortunately, a loss period 18 (shown as a dashed line box) occurs such that stagger stream 152 is missing packets "A" thru "J" and main stream 151 is missing packets "S" thru "B". Staggercast selector 155, of FIG. 2, detects that a packet is missing from main stream 151 when receiving packet "C" (12) since this received packet has a sequence number corresponding to "C" instead of any of "S" thru "B". While packets "S" thru "Z" of stagger stream 152 are available for replacing the missing packets in main stream 152, packets "A" and "B" (14) of stagger stream 152 are not available since they have also been damaged during loss period 18. As such, QoS to the user is not maintained, i.e., there is a break in the decoded audio/video content, which may result in audio/video artifacts.

### SUMMARY OF THE INVENTION

In view of the above, there is a need to improve the power of correction of staggercast. Therefore, and in accordance with the principles of the invention, a staggercast receiver, which receives at least a main stream and stagger stream, where the main stream has a stagger delay with respect to the stagger stream, detects an error in the received stagger stream and repairs the error in the stagger stream by receiving replacement content from a server within the stagger delay.

In an illustrative embodiment of the invention, an Advanced Television Systems Committee Digital Television (ATSC DTV) device comprises a receiver for receiving a staggercast transmission representing content comprising at least two packet streams, wherein one packet stream is a main stream and another packet stream is a stagger stream and there is a stagger delay between the main stream and the stagger stream; and a processor configured to detect an error in the received stagger stream; and repair the error in the received stagger stream by receiving replacement content from a remote server within the stagger delay.

In another illustrative embodiment of the invention, an Advanced Television Systems Committee Digital Television (ATSC DTV) device performs a method comprising receiving a staggercast transmission representing content comprising at least two packet streams, wherein one packet stream is a main stream and another packet stream is a stagger stream and there is a stagger delay between the main stream and the stagger stream; detecting an error in the received stagger stream; and repairing the error in the received stagger stream by receiving replacement content from a remote server within the stagger delay.

In view of the above, and as will be apparent from reading the detailed description, other embodiments and features are also possible and fall within the principles of the invention.

### BRIEF DESCRIPTION OF THE DRAWINGS

FIGs. 1 and 2 illustrate a prior art transmitter and a prior art receiver, respectively for use in a staggercast system;
FIG. 3 shows recovery of a missing packet in a staggercast system based upon detection of a missing sequence number;
FIG. 4 illustrates when packets in the stagger stream are not available to replace missing packets in the main stream;
FIG. 5 shows an illustrative embodiment of a device in accordance with the principles of the invention;
FIG. 6 shows an illustrative embodiment of a receiver in accordance with the principles of the invention;
FIGs. 7 and 8 show illustrative flow charts for use in a receiver in accordance with the principles of the invention; and
FIG. 9 shows recovery of a damage/missing packet in a stagger stream in accordance with the principles of the invention.

### DETAILED DESCRIPTION

Other than the inventive concept, the elements shown in the figures are well known and will not be described in detail. For example, familiarity with television broadcasting, receivers and video encoding is assumed and is not described in detail herein. As such, other than the inventive concept, familiarity with current and proposed recommendations for television (TV) standards such as ATSC (Advanced Television Systems Committee) and Digital Video Broadcasting (DVB), e.g., Digital Video Broadcasting-Terrestrial (DVB-T2) is assumed. Further, other than the inventive concept, familiarity with protocols such as the File Delivery over Unidirectional Transport (FLUTE) protocol, User Datagram Protocol (UDP), Asynchronous Layered Coding (ALC) protocol, Internet protocol (IP) and Internet Protocol Encapsulator (IPE), is assumed and not described herein. Similarly, other than the inventive concept, formatting and encoding methods (such as Moving Picture Expert Group (MPEG)-2 Systems Standard (ISO/IEC 13818-1)) for generating transport bit streams are well-known and not described herein. It should also be noted that the inventive concept may be implemented using conventional programming techniques, which, as such, will not be described herein. Finally, like-numbers on the figures represent similar elements.

As noted earlier, there is a need to improve the power of correction of staggercast. In particular, and in accordance with the principles of the invention, a staggercast receiver, which receives at least a main stream and stagger stream, where the main stream has a stagger delay with respect to the stagger stream, detects an error in the received stagger stream and repairs the error in the stagger stream by receiving replacement content from a server within the stagger delay. As a result, stagger stream content is available to replace damaged, or missing, content in the main stream even during a period of long loss such that the user does not suffer a loss in QoS when the content is presented to the user.

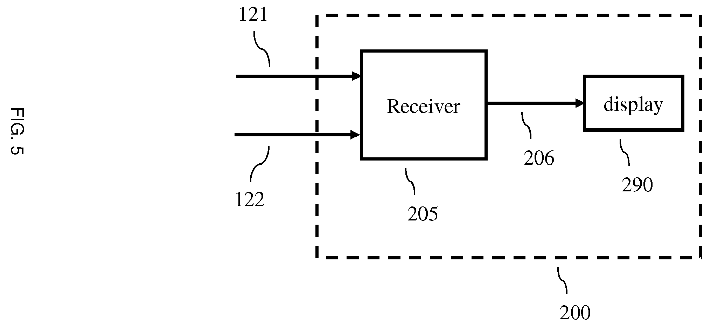

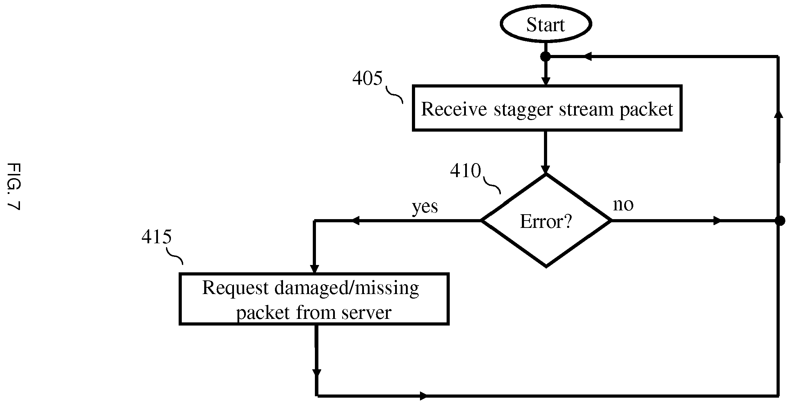

Referring now to FIG. 5, an illustrative embodiment of a device 200 in accordance with the principles of the invention is shown. Device 200 is representative of any processor-based platform, whether hand-held, mobile or stationary. For example, a PC, a server, a set-top box, a personal digital assistant (PDA), a cellular telephone, a mobile digital television (DTV), a DTV, etc. In this regard, device 200 includes one, or more, processors with associated memory (not shown). Device 200 includes a receiver 205 and a display 290. Receiver 205 receives a transmitted signal 121 (the transmission medium, e.g., broadcast etc., is not shown In FIG. 7) that uses staggercasting for processing to recover therefrom, e.g., a video signal 206 for application to display 290 for viewing video content thereon. In addition, receiver 205 has a broadband internet connection 122 for communicating with a remote server (not shown). In accordance with the principles of the invention, receiver 205 detects possible damaged/missing packets in a received stagger stream and receives replacement content for the damaged/missing packets from the remote server.

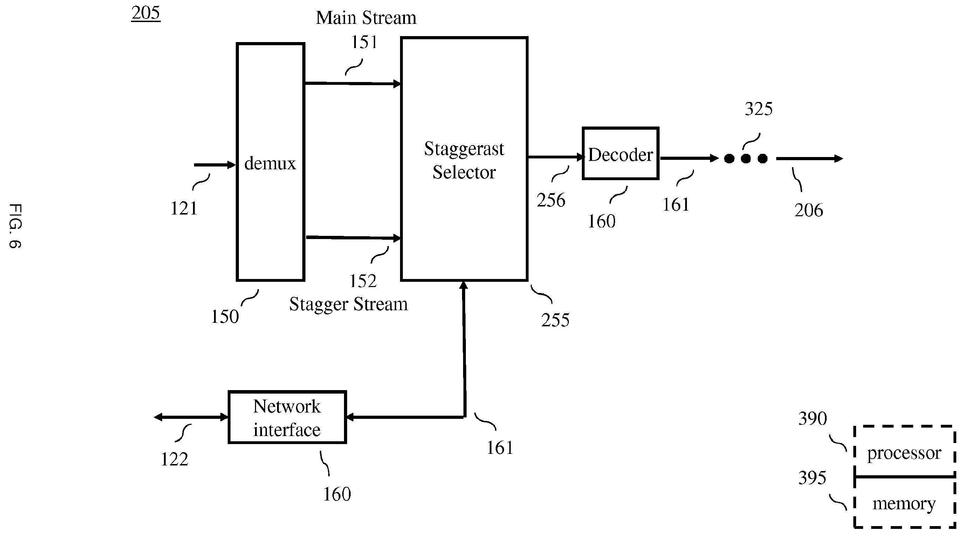

Turning now to receiver 205, an illustrative portion of receiver 205 in accordance with the principles of the invention is shown in FIG. 6. Only those portions relevant to the inventive concept are shown. Receiver 205 is a processor-based system and includes one, or more, processors and associated memory as represented by processor 390 and memory 395 shown in the form of dashed boxes in FIG. 6. In this context, computer programs, or software, are stored in memory 395 for execution by processor 390 and, e.g., implement staggercast selector 255. Processor 390 is representative of one, or more, stored-program control processors and these do not have to be dedicated to the receiver function, e.g., processor 390 may also control other functions of receiver 205. Memory 395 is representative of any storage device, e.g., random-access memory (RAM), read-only memory (ROM), etc.; may be internal and/or external to receiver 205; and is volatile and/or nonvolatile as necessary.

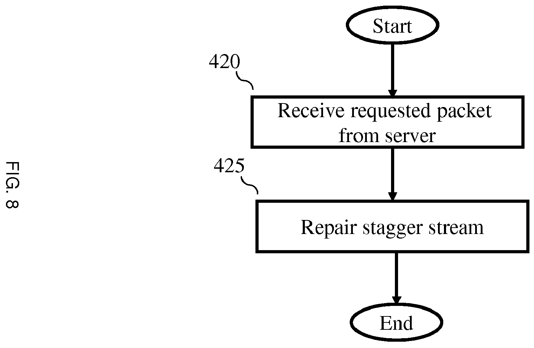

Receiver 205 comprises demultiplexer (demux) 150, staggercast selector 255, network interface 160 and decoder 160. Only those portions relevant to the inventive concept are shown. The transmitted stream (the transmission medium, e.g., broadcast, internet, etc., is not shown in FIG. 8) is received by demux 150, which demultiplexes the received transmitted stream 121 and provides main stream 151 and stagger stream 152. Therefore, in case of loss due to physical disruptions, a correction can be made on the receiver side by staggercast selector 255 by inserting data from stagger stream 152 in the main stream 151. In particular, and in accordance with the principles of the invention, when staggercast selector 255 detects an error (damaged packet or missing packet) in the received stagger stream, staggercast selector 255 repairs the error in the stagger stream by receiving replacement content from a server within the stagger delay via network interface 160 (described further below). Network interface 160 is coupled to the internet via path 122, which may be wired and/or wireless and include other servers/routers. As such, should the main stream be damaged, staggercast selector 255 can repair the main stream 151 using packets from the stagger stream. Staggercast selector provides a stream of packets (output signal 256) to decoder 160. The latter provides a decoded stream 161, which is processed by other circuitry (not shown) of receiver 205 as represented by ellipses 325 to recover therefrom, e.g., a video signal 206 for presentation to a user via display 290 of FIG. 5. As a result, the user does not suffer a loss in QoS.

Referring now to FIG. 7, an illustrative flow chart for use in receiver 205 in accordance with the principles of the invention is shown. In step 405, staggercast selector 255 receives a stagger stream packet from stagger stream 152. In step 410, staggercast selector 255 checks if there is an error in the received stagger packet, i.e., is the packet damaged/corrupted or is a packet missing (i.e., the received packet does not have the expected sequence number). If there is no error, staggercast selector 255 continues with the next received stagger stream packet in step 405. However, if an error is detected, staggerstream selector 255 requests replacement content from a server via network interface 160 in step 415 and then continues with the next received stagger stream packet in step 405.

When, within the stagger delay, the requested content is received from the remote server, staggercast selector 255 repairs the stagger stream. This is illustrated in FIG. 8. In step 420, staggercast selector 255, via network interface 160, receives the requested packet from the remote server. In step 425, staggercast selector 255 repairs the stagger stream by substituting the requested packet for the damaged/missing packet in stagger stream 152.

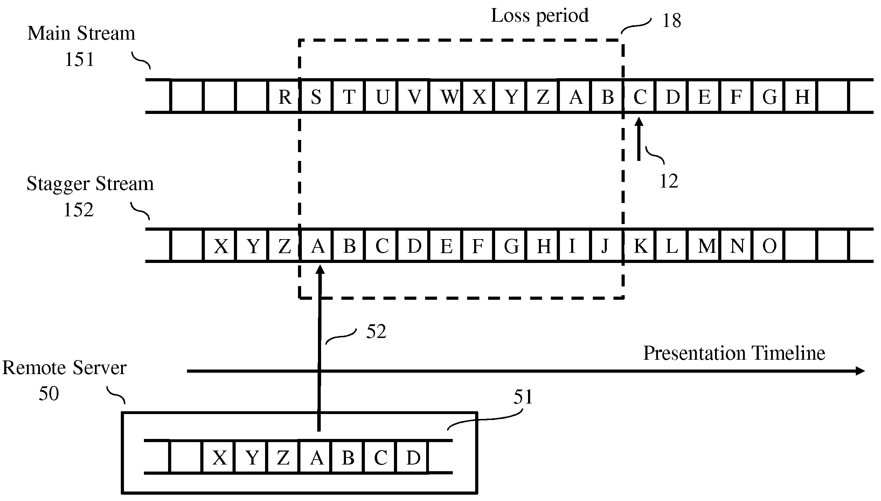

The inventive concept is further illustrated in FIG. 9. FIG. 9 is similar to FIG. 4, except that, e.g., when packets "A" thru "J" are detected as damaged/missing, staggercast selector 255 requests, for each stagger stream packet detected as damaged/missing, replacement content from remote server 50. The latter stores replacement content 51 and, in response to a received request, provides the requested content 52 (illustrated for just packet "A") to receiver 200.

As described above, and in accordance with the principles of the invention, the staggercast stream is repaired when errors (damaged packets, missing packets) are detected in it by sending a request to a remote server for replacement packets. The staggercast stream can be for both the video/audio or just the audio or just the video. The request, the response and the packet recovery are done during the staggercast delay offset. This delay (typically 3 seconds) is very useful in order to insure that the end device will have enough time to recover the erroneous packet(s) from the remote server.

In view of the above, the foregoing merely illustrates the principles of the invention apply to any staggercasting-based system and it will thus be appreciated that those skilled in the art will be able to devise numerous alternative arrangements which, although not explicitly described herein, embody the principles of the invention and are within its scope. For example, although illustrated in the context of a staggercast selector requesting replacement content, this could be determined by another part of the receiver either structurally or in a different portion of executed software. In addition, although illustrated in the context of separate functional elements, these functional elements may be embodied in one or more integrated circuits (ICs). Similarly, although shown as separate elements, any or all of the elements may be implemented in a stored-program-controlled processor, e.g., a digital signal processor, which executes associated software, e.g., corresponding to one or more of the steps shown in, e.g., FIGs. 7 and 8, etc. Further, although some of the figures may suggest the elements are bundled together, the inventive concept is not so limited, e.g., the elements of device 200 of FIG. 5 may be distributed in different units in any combination thereof. For example, receiver 205 of FIG. 5 may be a part of a device, or box, such as a set-top box that is physically separate from the device, or box, incorporating display 290, etc. It is therefore to be understood that numerous modifications may be made to the illustrative embodiments and that other arrangements may be devised without departing from the scope of the present invention as defined by the appended claims.

## Claims

1. A method for use in a receiver, the method comprising:
receiving a staggercast transmission representing content comprising at least two packet streams, wherein one packet stream is a main stream and another packet stream is a stagger stream and there is a stagger delay between the main stream and the stagger stream (405);
detecting an error in the received stagger stream (410); and
repairing the error in the received stagger stream by receiving replacement content from a remote server within the stagger delay from detecting the error (415).

2. The method of claim 1, wherein the detecting step comprises:
checking each packet of the received stagger stream if there is error; and
if there is an error, sending a request to the remote server for a replacement packet.

3. The method of claim 1, further comprising:
repairing at least one packet in the received main stream by using corresponding packets from the received stagger stream;
providing an output packet stream;
decoding the output packet stream for use in providing content to a user.

4. The method of claim 1, wherein the receiving step includes demultiplexing the received staggercast transmission for providing the main stream and the stagger stream.

5. Apparatus comprising:
a receiver for receiving a staggercast transmission representing content comprising at least two packet streams, wherein one packet stream is a main stream and another packet stream is a stagger stream and there is a stagger delay between the main stream and the stagger stream (150); and
a processor configured to detect an error in the received stagger stream; and repair the error in the received stagger stream by receiving replacement content from a remote server within the stagger delay from detecting the error (390, 395).

6. The apparatus of claim 5, wherein in being configured to detect an error, the processor is further configured to:
check each packet of the received stagger stream if there is error; and
if there is an error, send a request to the remote server for a replacement packet.

7. The apparatus of claim 5, wherein the processor is further configured to:
repair at least one packet in the received main stream by using corresponding packets from the received stagger stream; and
provide an output packet stream.

8. The apparatus of claim 7, further comprising a decoder for decoding the output packet stream for use in providing content to a user.

9. The apparatus of claim 5, wherein the receiver comprises a demultiplexer for demultiplexing the received staggercast transmission for providing the main stream and the stagger stream.

10. The apparatus of claim 5, wherein the processor represents a staggercast selector for selecting packets between the main stream and the stagger stream for presentation.
